# EUROPEAN PATENT APPLICATION

(11) **EP 4 205 610 A1**
(43) Date of publication of application: **05.07.2023**
(21) Application number: 22020626.2
(22) Date of filing: 22.12.2022
(51) Int. Cl.: A47J 37/06

(54) **APPARATUS FOR COOKING FOOD OF THE SALAMANDER TYPE WITH INDEXING OF TEMPERATURE VALUES**

(30) Priority: 29.12.2021 IT 202100005990 U
(71) Applicant: Moduline Srl, 31029 Vittorio Veneto (TV) (IT)
(72) Inventor: Favretti, Mauro, I- 31015 Conegliano (TV) (IT)
(74) Representative: Spagnolo, Chiara

(57) **Abstract**

Apparatus for cooking food of the salamander type with indexing of temperature values comprising a bearing structure (2) comprising at least one horizontal portion (21) and one vertical portion (22) as well as at least one working surface (4) and at least one heating surface (9) displaceable with respect to the working surface (4) and further including heating devices and command and control devices for managing at least the heating devices equipping the heating surface (9), wherein the vertical portion (22) comprises at least one graduated temperature scale (12) comprising at least one temperature index (121, 122, 123) and the heating surface (9) includes at least one reference index, which by means of the displacement of the heating surface (9), can be made to coincide with the at least one temperature index (121, 122, 123) of the at least graduated temperature scale (12).

## Description

The present invention refers to an apparatus for cooking food of the salamander type with indexing of temperature values.

### Field of the invention

The invention is applicable particularly, but not exclusively, to the sector of the industry for the production of apparatuses for cooking food of the so-called "salamander" type and widely to the industry of the production and marketing of apparatuses intended for cooking, regeneration and temperature holding of food.

Many apparatuses for cooking food are currently known. Even though they all have a common structure and apparatuses suitable for cooking food, there may be various and substantial differences among apparatuses of different types. As far as it is concerned, although all food cooking apparatuses are equipped with heating devices, a substantial distinction can be made between open- chamber cooking apparatuses and closed- chamber cooking apparatuses according to whether they are structured in such a way as to provide a heating chamber that can be accessed and closed by means of a suitable door or are of the type in which a real cooking chamber with perimetric walls is not provided. In the latter case, even if a cooking chamber is provided, it is made in such a way as to be open at least on one perimetric side. As far as it concerns the subject-matter of the present invention, among the open- chamber solutions, also that particular type of apparatus for cooking food known as salamander is included. Apparatuses for cooking of the salamander type are traditionally structured in such a way as to comprise at least one cooking surface on which food to be cooked or heated is positioned, said cooking surface being parallelly opposed to a heating surface provided with heating elements, of the electric type generally consisting of electrical resistances or halogen lamps, however solutions provided with gas heating means are also known. Furthermore, the usual structure of said apparatuses for cooking of the salamander type is made in such a way that the heating surface, in some solutions, can also be displaced close and away from the cooking surface, said surfaces being mutually engaged by means of suitable supporting structures. Apparatuses for cooking of the salamander type are mainly designed to equip kitchens of the professional type intended for collective catering, however, even if to a limited extent, some of them are designed to equip home kitchens, as they can also be made in such a way as to adequately reduce their sizes. The specific scope of apparatuses for cooking of the salamander type is to allow food cooking operations and in particular to allow food grilling operations, but to also allow roasting or even heating and temperature holding operations. In the known state of the art, most of the apparatuses for cooking of the salamander type are provided with heating means exclusively positioned near the upper heating surface, being also known apparatuses for cooking of the salamander type which provide for the arrangement of heating devices also near the cooking surface. The peculiarity of the structure of the apparatuses of the salamander type consists, in particular for those solutions providing the possibility of displacing the heating surface with respect to the cooking surface in order to suitably vary the reciprocal distance, in the characteristic of being able to bring the heating surface to a suitable distance for the adjustment of the irradiation of the food on the cooking surface.

### State of the art

Also in the present patent literature, it is possible to find some solutions of apparatuses for cooking food of salamander type, among which, by way of example only, the following are cited:
D1 No. IT1234673 (Giorik)
D2 No. WO2014/041460 (Rizzato)
D3 No. EP1532908 (Salvis)
D4 No. DE202012010786 (Hellweg)

D1 briefly describes a solution of a device for adjusting the position of the dish with the food to be cooked, with respect to the fixed heat source, said device substantially consists of a transversal shaft, with bearings or bushings, for rolling on inclined surfaces, placed on said inclined surfaces and communicating with end sleeves which slide onto suitable guides which are integral with the base and onto which sleeves the legs of the food tray holder are inserted, the surfaces obtained by lowering the height of cylindrical walls, concentric to the disk that supports them and makes them rotate being inclined.

D2 briefly describes a solution of a salamander oven comprising a casing equipped with external walls and internal walls which define a cooking chamber provided with a front opening, said solution being further equipped with heating elements placed in the upper part of the cooking chamber and being further equipped with at least one grill which can be placed inside the cooking chamber, said casing being provided with reinforcing elements placed between at least two internal dividers, said reinforcing elements are suitable for preventing deformation of said dividers as a result of thermal dilatation, wherein, in particular, the reinforcing elements are placed at least between two internal side dividers and include at least one strut connected thereto at their ends.

Briefly, D3 describes a salamander apparatus essentially comprising a base element, a supporting column and a radiant heating element mounted on the supporting column so as to be adjustable in height, wherein the radiant heating element can suitably be displaced for adjusting the distance from the cooking base, so that the heating effect can effectively be favored on the basis of cooking needs, it is envisaged that the radiating element can be conveniently moved to adjust its distance from the cooking base by providing that the mounting of the radiant heating element on the supporting column is arranged at least approximately in a vertical line passing through the center of gravity of the radiant heating element itself, unlike what it might happen in other salamander apparatuses wherein the displacement means of the heating element are positioned at the side ends of the apparatus. The implemented suspension of the heating element at the center of gravity is said to cause a drastic reduction of the friction forces acting in contrast to the displacement of the heating element which, in this way, can be vertically displaced in an easier way for the user, since the guiding rod of the heating element is made with a non-circular section so as to avoid the possibility that the heating element can make rotational movements around the guiding column.

D4 briefly describes a solution of a salamander apparatus which is structured in such a way as to allow greater ease of use in moving the heating element so as to solve the problems of the solutions using a counterweight and mechanical locking for locking the heating element at the desired height. In the solution according to the invention, the salamander apparatus comprises a heating surface which can be translated along a guiding column, in which by means of suitable magnetic devices it is possible to keep the position of the heating surface at the desired height with respect to the cooking surface. The solution is conceived in such a way that it is established a magnetic interaction between the heating surface and the guiding column, along which the heating surface translates. By way of example, it is provided that by means of the electric circuit feeding the heating surface, also an electromagnet can be fed for its activation, the latter can be placed in the heating surface or in the guiding column in such a way that, in order to block at a given height the heating surface, the electromagnet can be activated so as to interact with a corresponding countermagnet or a magnetizable material with which the element which is opposite to the electromagnet is provided. Furthermore, it is provided that the solution is implemented in such a way as to include permanent magnets or magnetizable materials which are placed at intervals on the guiding column, wherein the heating surface is suitably equipped with a permanent magnet with opposite polarity. In the solution, therefore, it is foreseen that if the magnet present in the heating surface is at the same level as one of the magnets on the guiding column, the force of attraction determined between the guiding column and the heating surface is greater, being such to allow to bear the weight of the heating surface keeping it in the determined height position.

### Disadvantages

All the known solutions of apparatuses for cooking of the salamander type according to the state of the art have deficiencies and limits, which cause consequent disadvantages.

According to the applicant, a first disadvantage characterizing all the solutions of apparatuses for cooking of the salamander type, according to the known state of the art, has been verified in that all said known solutions are not suitable for allowing the operator to easily and intuitively detect which is the best positioning of the heating surface relative with respect to the working surface in relation to the set working program.

According to the applicant, a second disadvantage characterizing all the solutions of apparatuses for cooking of the salamander type, according to the known state of the art, has been verified in that all said known solutions are not structured in such a way as to allow an immediate setting of the processing temperature by simply displacing the heating surface.

According to the applicant, a third disadvantage characterizing all the solutions of apparatuses for cooking of the salamander type, according to the known state of the art, has been verified in that all said known solutions are not arranged in such a way to allow an immediate reference of the processing temperatures in relation to the height of the heating surface, with graduated scales and temperature indices arranged according to the different processing programs that can be set.

According to the applicant, a third disadvantage characterizing all the solutions of apparatuses for cooking of the salamander type, according to the known state of the art, has been verified in that all said known solutions are not arranged in such a way to allow an immediate reference of the processing temperatures in relation to the height of the heating surface, with graduated scales and temperature indices arranged according to the different processing programs that can be set.

As a whole, according to these introductive considerations, it can be understood that it is a priority to identify alternative solutions.

### Summary of the invention

This and other aims are reached by the present invention according to the characteristics as in the appended claims by solving the mentioned problems by means of an apparatus for cooking food of the salamander type with indexing of temperature values comprising a bearing structure (2) including at least one horizontal portion (21) and one vertical portion (22) as well as at least one working surface (4) and at least one heating surface (9), displaceable with respect to the working surface (4), and further comprising heating devices and command and control devices for managing at least the heating devices equipping the heating surface (9) in which the vertical portion (22) comprises at least one temperature graduated scale (12) comprising at least one temperature index (121, 122, 123 ) and the heating surface (9) comprises at least one reference index which last, by means of the displacement of the heating surface (9), can be made to coincide with at least one temperature index (121, 122, 123) of the at least temperature graduated scale (12).

### Aims and advantages

In this way, thanks to the considerable creative contribution the effect of which constitutes an immediate technical progress, multiple advantages are achieved.

A first advantageous aim of the present solution is to obtain an apparatus for cooking food of the salamander type with indexing of the temperature values, whose innovative structure allows to detect in an easy and intuitive way which is the best positioning of the heating surface with respect to the working surface in relation to the set working program.

A second advantageous aim of the present solution is to obtain an apparatus for cooking food of the salamander type with indexing of temperature values, whose innovative structure allows to immediately set the processing temperature by simply displacing the heating surface.

A third advantageous aim of the present solution is to obtain an apparatus for cooking food of the salamander type with indexing of temperature values whose innovative structure allows an immediate reference to the processing temperatures in relation to the height of the heating surface, with graduated scales and temperature indexes arranged according to the different working programs that can be set.

Another advantageous aim of the present solution is to obtain an apparatus for cooking food of the salamander type with indexing of temperature values, whose innovative structure allows to achieve an optimal facilitation of the processing operations also through a permissible reduction in the setup times of processing operations.

These and other advantages will appear in the following detailed description of some preferred embodiments with the aid of the enclosed schematic drawings, whose details are not to be intended as limiting.

### Content of the drawings

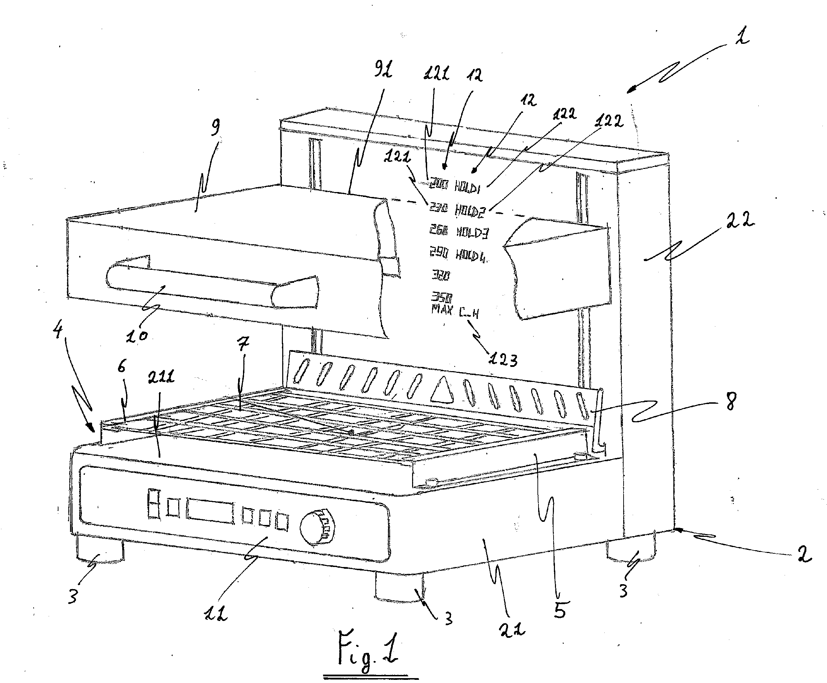

Figure 1 shows an isometric three-quarter front view from above, of the apparatus for cooking food of the salamander type with indexing of temperature values according to the subject-matter of the present invention in which the displaceable heating surface is partially represented in section.

### Practical realization of the invention

With reference also to the representations of figure 1, an apparatus for cooking food of the salamander type with indexing of temperature values is described, in the continuation of the description it is referred to as salamander apparatus (1), which, as particularly represented in figure 1 exemplifying an embodiment of the invention to be considered as a basic solution, it is expected to be implemented in such a way as to include a bearing structure (2), the latter comprising a horizontal portion (21) and a vertical portion (22) wherein, in the embodiment described above, the horizontal portion (21) is implemented in such a way as to be arranged orthogonally with respect to the vertical portion (22), in which in the described embodiment, the horizontal portion (21) of the bearing structure (2) is placed contiguously with the lower portion of the vertical portion (22). Both the horizontal portion (21) and the vertical portion (22) of the bearing structure (2) are implemented in a known way, being possible in any case that, with respect to the configuration suggested in figure 1, the bearing structure (2) of which the horizontal portion (21) and the vertical portion (22) are part, may be implemented also differently, according to known variants and within the capacity of the average technician skilled in the sector, as a non-limitative example, the bearing structure (2) being implemented in such a way that the vertical portion (22) consists of at least one bearing column.

In greater detail of the embodiment which is described as illustrated in the representation of figure 1, the bearing structure (2) of the salamander apparatus (1) comprises, under the horizontal portion (21), supporting feet (3) of the known type which are implemented in order to allow a stable support of the salamander apparatus (1) itself, since said supporting feet (3) can be equipped with non-slip ends of a known type. As shown in figure 1, the horizontal portion (21) of the bearing structure (2) of the salamander apparatus (1) is implemented in such a way as to include a working surface (4). In the embodiment described, as shown in Figure 1, the working surface (4) is implemented in such a way as to include a grill element (7), of a known type, for positioning the food to be cooked. In greater detail of the described embodiment, the working surface (4) is implemented in such a way that the horizontal portion (21) of the bearing structure (2) of the salamander apparatus (1) comprises an upper surface (211) to which latter, in the example, supporting elements (5, 6) of the known type are engaged and implemented in such a way as to allow the suitable support of a grill (7), of the known type, suitably implemented to allow the placement, for processing purposes, of the food to be cooked. In further detail of the described embodiment, it is provided that one first supporting element (5) and one second supporting element (6) are engaged to the upper surface (211) of the horizontal portion (21) of the bearing structure (2) of the salamander apparatus (1); those supporting elements being specularly symmetrical and suitable for slidingly and removably engaging the grill (7), so as to facilitate the cleaning operations of the upper surface (211), of the working surface (4), as a result of possible molten food during cooking operations. In the example, it is also provided that the salamander apparatus (1) is equipped with a splash guard element (8) which is placed close to the vertical portion (22) in correspondence with the lower part of the same.

Furthermore, the salamander apparatus (1) according to the invention provides that the vertical portion (22) of the bearing structure (2) is implemented in such a way as to be suitable to conveniently constrain a displaceable heating surface (9), of the known type, which is equipped in a known way with suitable heating devices of the known type. In the described embodiment, said heating devices with which the heating surface (9) is equipped are provided to be of the electric type, but not limited to; in the example, said heating devices being preferably, but not limited to, electric resistors or halogen lamps. In greater detail of the described example, it is provided that the heating surface (9) is in parallel opposite to the working surface (4) and that the heating devices with which the heating surface (9) is equipped are positioned in such a way to allow the heating of the working surface (4), in particular of food that is positioned on the grill (7), said heating devices being more than one and being arranged on the heating surface (9) in such a way as to partition it at least in heating zones depending on the positioning of the activated heating device.

In the detail of the described embodiment, it is provided that the heating surface (9) of the salamander apparatus (1) according to the invention is equipped with at least three heating devices, one of which is central and two of them are lateral, with respect to the central heating device, there is the possibility for said heating devices to be also activated individually, according to specific needs. Furthermore, as mentioned, the heating surface (9) is expected to be displaceable along the vertical axis in such a way as to allow a guided movement, by the operator, towards or away from the working surface (4), to this end both the heating surface (9) and the vertical portion (22) of the bearing structure (2) of the salamander apparatus (1) being equipped with suitable and known constraint and guiding devices. In order to allow the operator to be able to carry out the displacing movements, it is provided that the heating surface (9), as represented in the representation of figure 1, is provided with a suitable handle (10) which, in the example of figure 1, is placed in correspondence with the front part of the heating surface (9). Furthermore, in order to allow the functioning of the salamander apparatus (1) it is provided that the latter is equipped with a command interface (11) provided with known command devices and with known devices for functioning signaling and is provided with known command and control devices, functionally connected in a known way, in order to allow activation and control in particular of the heating devices equipping the heating surface (9), as well as such as to allow the user to be able to set at least cooking, holding or gratin and holding programs, as well as the execution time of the same and all the parameters that can be set for allowing the execution of the working programs.

With reference to the solution according to the invention subject matter of the present invention, it is provided that, by means of the command interface (11), the user can set at least the desired type of cooking, holding or gratin and holding program and the execution time of these programs at least in the part in which they can be set, also providing the possibility that the salamander apparatus (1) according to the invention can also include at least programs for cooking, holding or gratin and holding of the pre-set types, further providing also the possibility that the salamander apparatus (1) of the solution, by means of the command interface (11), can be able to set the processing time and it is also possible to set the functioning also of a single heating device or of more than one or of all heating devices depending on the needs of use. As known, the distance between the heating surface (9) and the working surface (4) affects the amount of heat reaching the food on the working surface (4) with the consequence that the smaller the distance between the heating surface (9) and the working surface (4), the greater the amount of heat that will radiate the work surface (4) and that, in this way, will be transferred to the food under preparation.

Innovatively, in the solution subject matter of the present invention it is made possible for the operator to immediately determine, according to the set program, the temperature values which will affect the working surface (4) and consequently, the food under preparation, based on the distance of the heating surface (9) from the working surface (4) in such a way as to simplify the cooking, holding or gratin and holding operations which can at least be set as working programs in the salamander apparatus (1) of the invention. The mentioned possibility of determining the temperature values remains also in the case in which the salamander apparatus (1) subject matter of the present invention is set not to operate with all the heating devices with which the heating plate (9) is provided in functioning condition, but, by way of example, only with the central heating device activated of the heating surface (9). To the mentioned aim of allowing the immediate identification of the temperature value affecting the working surface (4) of the horizontal portion (21) of the supporting structure (2) of the salamander apparatus (1), according to the different working programs set, it is provided that the vertical portion (22) of the supporting structure (2) of the salamander apparatus (1) itself is equipped with at least one graduated temperature scale (12) indicating the temperature values which, during the working program set, are determined by the distance of the heating surface (9) from the working surface (4). In this way the user can easily and immediately define the temperature to which the food under preparation placed on the working surface (4) will be processed by adjusting the height of the heating surface (9) in such a way that at least one reference index on the heating surface (9) can be made to coincide with a temperature index (121, 122, 123) of the graduated temperature scale (12) with which the vertical portion (22) of the bearing structure (2) of the salamander apparatus (1) has been provided, wherein it is provided that, as represented in the example of figure 1, the reference index of the heating surface (9) corresponds to the upper horizontal side (91) of said heating surface (9).

More in detail of the described embodiment, it is provided that the vertical portion (22) of the bearing structure (2) of the salamander apparatus (1) is equipped with different graduated scales (12) each showing different temperature indices (121, 122, 123), in which a first graduated scale (12) is provided for showing cooking temperature indices (121), in columns, said cooking temperature indices (121) having increasing temperature values starting from the cooking temperature index (121) located above. Said cooking temperature indices (121) are included in a range of values from a minimum to a maximum, in the described example, as particularly represented in figure 1, said cooking temperature indices (121) being in a range between a minimum of 200 degrees Celsius and a maximum of over 350 degrees Celsius, with increments of 30 degrees Celsius between one cooking temperature index (121) and the following or the previous one between 200 degrees Celsius and 350 degrees Celsius. The cooking temperature indices (121) provided on the graduated scale (12) are assumed to reflect the temperature values affecting the working surface (9) as a consequence of the measurement of the height at which the heating surface (9) is.

Furthermore, it is provided that, as particularly represented in figure 1, the vertical portion (22) of the bearing structure (2) of the salamander apparatus (1), next to the graduated scale (12) indicating the cooking temperature indices (121) is equipped with a second graduated scale (12), which indicates holding temperature indices (122), in the example, said holding temperature indices (122) indicating different temperatures from those referred to cooking temperature indices (121), providing that the setting of the holding programs, as known, also intervenes on the temperature values of the heating devices so that their temperature during the holding phases is, in a known way, kept at a lower level than the temperature of the heating devices during cooking phases. In greater detail of the described embodiment, it is provided that the graduated temperature scale (12) of the holding programs provides holding temperature indices (122) to which four different temperatures correspond, referring to the temperatures necessary for carrying out the provided holding programs, particularly in the example, the holding temperature indices (122) indicated in figure 1 being in a range between a minimum of 70 degrees Celsius and a maximum of 100 degrees Celsius, with increments of 10 degrees Celsius between a holding temperature index (122) and the following or previous one between 70 degrees Celsius and 100 degrees Celsius. Furthermore, in the described embodiment, as particularly represented in figure 1, the salamander apparatus (1) according to the invention is expected to provide that the graduated temperature scale (12) of the gratin and holding programs provides at least one gratin and holding temperature index (123) actuating a reference for allowing the positioning of the heating plate (9) in such a way that it is correctly positioned for activating the gratin and holding program so as to allow that, during its execution, the food being processed on the working surface (4) is, for a time defined by the setting of the gratin and holding program, subjected to the maximum gratin temperature, to subsequently automatically lower the temperature until it reaches a set holding temperature without having to change the height of the heating surface (9). During the execution of the gratin and holding program it is expected that the holding temperature can be kept for a potentially indefinite time, said holding time being operationally defined by the intervention of the operator.

### REFERENCES

(1) salamander apparatus
(2) bearing structure
(21) horizontal portion
(211) upper surface
(22) vertical portion
(3) supporting foot
(4) working surface
(5) first supporting element
(6) second supporting element
(7) grill
(8) splash guard element
(9 heating surface
(91) upper horizontal side
(10) handle
(11) command interface
(12) graduated temperature scale
(121) cooking temperature index
(122) holding temperature index
(123) gratin and holding temperature index

## Claims

1. Apparatus for cooking food of the salamander type with indexing of temperature values comprising a bearing structure (2) comprising at least one horizontal portion (21) and one vertical portion (22) as well as at least one working surface (4) and at least one heating surface (9) displaceable with respect to the working surface (4) and further including heating devices and command and control devices for managing at least the heating devices equipping the heating surface (9), **characterized in that** the vertical portion (22) comprises at least one graduated temperature scale (12) comprising at least one temperature index (121, 122, 123) and the heating surface (9) includes at least one reference index, which by means the displacement of the heating surface (9), can be made to coincide with at least one temperature index (121, 122, 123) of the graduated temperature scale (12).

2. Salamander apparatus (1) according to the previous claim, **characterized in that** the reference index of the heating surface (9) corresponds to the upper horizontal side (91) of said heating surface (9).

3. Salamander apparatus (1) according to at least one of the previous claims, **characterized in that** the vertical portion (22) includes at least one graduated scale (12) comprising cooking indices (121) with increasing temperature values starting from the cooking temperature index (121) placed above.

4. Salamander apparatus (1) according to claim 3, **characterized in that** the cooking temperature indices (121) are included in a range of values between a minimum of 200 degrees Celsius and a maximum of over 350 degrees Celsius, with increments of 30 degrees centigrade between a cooking temperature index (121) and the following or the previous one between 200 degrees Celsius and 350 degrees Celsius.

5. Salamander apparatus (1) according to claims 1 or 2, **characterized in that** the vertical portion (22) comprises at least one graduated scale (12) comprising holding temperature indices (122) with increasing temperature values starting from the holding temperature index (122) placed above.

6. Salamander apparatus (1) according to claim 5, **characterized in that** the holding temperature indices (122) are comprised in a range of values comprised between a minimum of 70 degrees Celsius and a maximum of 100 degrees Celsius, with increments of 10 degrees Celsius between a holding temperature index (122) and the following or previous one between 70 degrees Celsius and 100 degrees Celsius.

7. Salamander apparatus (1) according to claims 1 or 2, **characterized in that** the vertical portion (22) comprises at least one gratin and holding temperature index (123).

8. Salamander apparatus (1) according to at least one of the claims 1 to 6 **characterized in that** the vertical portion (22) comprises at least one temperature graduated scale (12) with at least one cooking temperature index (121) and one temperature graduated scale (12) with at least one holding temperature index (122).

9. Salamander apparatus (1) according to claim 8, **characterized in that** the vertical portion (22) comprises at least one gratin and holding temperature index (123).
